# EUROPÄISCHE PATENTSCHRIFT

(11) **EP 3 049 374 B1**
(45) Veröffentlichungstag und Bekanntmachung des Hinweises auf die Patenterteilung: **08.11.2017**
(21) Anmeldenummer: 14772145.0
(22) Anmeldetag: 24.09.2014
(51) Int. Cl.: C03C 23/00, B23K 26/00, B41M 5/24, B41M 5/26

(54) **LASERINDUZIERTE VOLUMENFÄRBUNG VON GLAS UND GLASKERAMIKEN**
LASER-INDUCED VOLUME COLORING OF GLASS AND GLASS CERAMICS
COLORATION EN VOLUME INDUITE PAR LASER DE VERRE ET DE VITROCÉRAMIQUES

(30) Priorität: 24.09.2013 DE 102013110576
(43) Veröffentlichungstag der Anmeldung: 03.08.2016
(73) Patentinhaber: Schott AG, 55122 Mainz (DE)
(72) Erfinder: SPIER, Martin, 55457 Horrweiler (DE); WAGNER, Fabian, 55118 Mainz (DE); HOCHREIN, Oliver, 55130 Mainz (DE)
(74) Vertreter: Blumbach Zinngrebe
(86) Internationale Anmeldenummer: PCT/EP2014/070310
(87) Internationale Veröffentlichungsnummer: WO 2015/044168

(56) Entgegenhaltungen:
- DE-A1- 10 162 111
- TAKESHIMA N ET AL: "Precipitation of silver particles by femtosecond laser pulses inside silver ion doped glass", JOURNAL OF NON-CRYSTALLINE SOLIDS, NORTH-HOLLAND PHYSICS PUBLISHING. AMSTERDAM, NL, Bd. 336, Nr. 3, 15. Mai 2004 (2004-05-15), Seiten 234-236, XP004502434, ISSN: 0022-3093, DOI: 10.1016/J.JNONCRYSOL.2004.01.005
- LIVINGSTON F E ET AL: "Influence of cerium on the pulsed UV nanosecond laser processing of photostructurable glass ceramic materials", APPLIED SURFACE SCIENCE, ELSEVIER, AMSTERDAM, NL, Bd. 247, Nr. 1-4, 15. Juli 2005 (2005-07-15), Seiten 526-536, XP027771621, ISSN: 0169-4332 [gefunden am 2005-07-15]

## Beschreibung

Die Erfindung betrifft ein Verfahren zur lokal begrenzt flächigen oder auch vollflächigen Veränderung der Absorptionseigenschaften von Gläsern und glaskeramischen Materialien über zumindest einen Teil der Dicke und/oder des Volumens des Ausgangsmaterials durch eine Behandlung mit elektromagnetischer Strahlung, so dass die Transmission über einen Teil oder vorzugsweise die gesamte Dicke des monolithischen Ausgangsmaterials in gewünschtem Maße verändert wird. Weiterhin betrifft die Erfindung Glas- oder Glaskeramikelemente, die mittels des erfindungsgemäßen Verfahrens herstellbar sind.

Für eine lokale Veränderung der Transmission von Bauteilen aus Glas oder Glaskeramik sind bisher vier verschiedene Varianten möglich:
Zum Einen kann durch das Fügen von zwei verschiedenen Materialien mit unterschiedlicher Transmission ein Bauteil erzeugt werden, welches partiell eine andere Transmission aufweist. Dabei können alle Fügeverfahren wie Löten,
Schweißen und Kleben zum Einsatz kommen. Nachteilig ist dabei, dass hierbei zwei verschiedene Materialien mit unterschiedlicher Transmission benötigt werden. Diese müssen aufwändig einzeln hergestellt werden, wobei die Einstellung einer bestimmten und unterschiedlichen Transmission eine Herausforderung darstellt oder in vielen Fällen überhaupt nicht dargestellt werden kann. Die zwei verschiedenen Materialien können zudem unterschiedliche mechanische, physikalische und chemische Eigenschaften aufweisen. Dies kann im späteren Einsatzfall nachteilig sein in Bezug auf Temperaturwechselbeständigkeit, chemische Beständigkeit und mechanische Bruchfestigkeit. Außerdem ist die Fügenaht auch mit anderen physikalischen und chemischen Eigenschaften behaftet und kann sich nachteilig auf die Bauteileigenschaften auswirken. Zudem ist die Fügenaht meist optisch störend oder bildet eine Bruchausgangskante.
Außerdem ist das Einfügen von geschlossenen Flächen in ein großes Bauteil oft sehr schwierig, da allseitig gefügt werden muss und Spaltmaße schwer einzuhalten sind; auch Kräfte auf die Fügenaht zur Steigerung der Haftvermittlung können nicht aufgebracht werden.

Zum Anderen kann eine lokale Änderung der Transmission durch lokale Beschichtung erfolgen. Eine solche Lösung wird beispielsweise in der WO 2012/001300 A1 vorgeschlagen. Zwar wird hier nur noch ein Material im Gegensatz zum Fügeverfahren, aber dafür zusätzlich ein Beschichtungsstoff benötigt, welcher bestimmte geforderte Transmissionseigenschaften erfüllen muss. Um eine lokal höhere Transmission zu erzielen, werden die Bereiche des Bauteils beschichtet, die eine geringere Transmission haben sollen. Voraussetzung dafür ist, dass die Grundtransmission des gesamten Bauteils so hoch ist wie die höchste geforderte Transmission im fertigen Produkt. In der Praxis kann dies ebenfalls zu einem erhöhten Aufwand führen, da gegebenenfalls die Glaszusammensetzung zu ändern ist.

Auch der Aufwand für die partielle Beschichtung ist nicht zu unterschätzen, da in irgendeiner Weise maskiert werden muss. Nachteilig am Beschichtungsverfahren ist außerdem, dass eine geeignete Beschichtung zu finden ist, welche sowohl auf dem Bauteil ausreichend haftet als auch alle späteren Einsatzbedingungen des Bauteils ohne Schädigung übersteht.

Zusätzlich schafft die Beschichtung eine neue Oberfläche auf dem Bauteil mit anderen chemischen und physikalischen Eigenschaften. Dies kann beispielsweise bei Pharmaverpackungen nachteilig sein, da bei einer Innenbeschichtung ein Kontakt mit dem pharmazeutischen Produkt erfolgt. Bei einer äußeren Beschichtung eines Produktes kann es zu Kratzern oder anderweitigen Veränderungen und Beschädigungen kommen. Außerdem trägt eine Beschichtung immer auf der Oberfläche auf, was oft hinsichtlich der Haptik, Optik, Kratzanfälligkeit oder Reibung unerwünscht ist.

Auch ist zum dritten ein Verfahren zur Laserbeschriftung von keramischen Materialien, Glasuren, keramischen Gläsern und Gläsern aus der EP 0233146 B1 bekannt. Dabei werden dem zu beschriftenden Material als strahlungsempfindlicher Zusatzstoff anorganische Pigmentpartikel in Form eines "keramischen Farbkörpers" beigemischt, welcher durch die Laserbestrahlung eine andere Farbe annimmt. Da solche Pigmentpartikel in Gläsern und Glaskeramiken nur während der Schmelze zugeführt werden könnten, würden diese mit aufgeschmolzen und der Effekt wäre nicht mehr gegeben. Nur bei Keramiken, die aus Pulvern zusammengesintert werden, ist ein solches Verfahren denkbar. Auch ist ein gepulster und fokussierter Laserstrahl, welcher oberflächlich einwirkt, zwingend erforderlich, da die Keramiken nicht transparent sind. Die optimale, zur Bestrahlung auszuwählende Wellenlänge bei diesem Verfahren ist dabei diejenige, bei welcher der strahlungsempfindliche Zusatzstoff am meisten, das zu beschriftende anorganische Material dagegen am wenigsten absorbiert. Voraussetzung ist daher eine lokal unterschiedliche Absorption des Ausgangsmaterials, es müssen also lokale Absorptionspunkte in der Keramik enthalten sein, die zu einer lokal unterschiedlichen Absorption (und damit einem anderen Farbeindruck) des zu beschriftenden Ausgangsmaterials führen. Auch ist die Eindringtiefe dieser Markierung üblicherweise nicht größer als ca. 1 mm, da Keramiken im Allgemeinen opak sind.

Ein viertes Verfahren ist das Verfahren zur Laserinnenmarkierung von transparenten Gläsern und transparenten Glaskeramiken. Dabei wird mit einem gepulsten hochfokussierten Laserstrahl in einem kleinen punktförmigen Volumen (typischerweise deutlich kleiner als 1mm³) innerhalb des Glases ein Mikroriss erzeugt und damit eine lokale Zerstörung der Struktur bzw. des Gefüges herbeigeführt. Dies führt zu einer lokalen Reflexions- bzw. Streufläche, welche auftreffendes Licht ablenkt, reflektiert oder in alle Richtungen streut und so zu einem Milchglaseffekt führt. Das Glas wird lokal transluzent, was aber nicht unbedingt zu einer Änderung der (totalen) Transmission führen muss. Der Fokus des Laserstrahls muss dabei von Punkt zu Punkt innerhalb des Glasvolumens geführt werden, um flächig oder räumlich ausgedehnte Muster zu erzeugen. Voraussetzung ist außerdem, dass das Glas oder die Glaskeramik vor der Behandlung hochtransparent ist.

### Aufgabe der Erfindung

Der Erfindung liegt die Aufgabe zu Grunde, in einer begrenzten Fläche eines Glases oder einer Glaskeramik auf einfache Weise eine Veränderung der Absorptionseigenschaften über zumindest einen Teil der Dicke und/oder des Volumens des Ausgangsmaterials so herbeizuführen, dass die Transmission über die behandelten Teilbereiche des Ausgangsmaterials an einem monolithischen Bauteil verringert wird. Insbesondere erfolgt eine gleichmäßige Verringerung der Transmission über den gesamten sichtbaren Spektralbereich.

Dabei sollen dem monolithischen Bauteil weder zusätzliche Färbekörper in Form von anorganischen Pigmenten beigemischt werden müssen, noch soll man zusätzliche Beschichtungen oder Fügungen benötigen, um eine lokale oder vollflächige bzw. vollvolumige Transmissionsänderung zu erzeugen.

Auch sollen lokale Streuzentren im Material entfallen können, die durch lokale Zerstörung oder Veränderung der Struktur des Ausgangsmaterials erzeugt werden.

Der Einsatz eines teuren hochfokussierten Lasers, dessen Fokuspunkte präzise durch das Material gefahren werden muss und der nur ein extrem kleines Volumen behandeln kann, ist ebenfalls mit der Erfindung nicht mehr notwendig.

Die Nachteile einer Fügenaht, nämlich das optische Erscheinungsbild und das Vorhandensein einer oder mehrerer zusätzlicher Bauteilkanten, die zum Bruch führen können, sollen mit der Erfindung vermieden werden.

Auch sollen in einfacher Art und Weise geschlossene Flächen innerhalb einer größeren Fläche transmittiv verändert werden können, ohne ein anderes Material dafür einfügen zu müssen. Insbesondere entfällt auch die Herstellung mehrerer unterschiedlicher Ausgangsmaterialien mit unterschiedlicher Transmission.

Außerdem sollen Beschichtungen nicht mehr notwendig sein, um die Transmission lokal zu beeinflussen. Damit kann die Suche nach einem Beschichtungsstoff und einem passenden Beschichtungsverfahren entfallen. Andererseits können aber auch gegebenenfalls Beschichtungen zum Einsatz kommen, um die Transmission und/oder Farbe anzupassen oder um andere Eigenschaften, wie etwa eine Entspiegelung bereitzustellen.

Es kann auch das Beimischen von irgendwelchen partikelförmigen Zusatzstoffen entfallen, die zum Ausgangsmaterial passen und sich chemisch mit diesem vertragen müssen. Auch ein heterogener Farbeindruck des Ausgangsmaterials durch das beigemischte Pigment kann so vermieden werden.

Die Aufgabe der Erfindung wird bereits durch den Gegenstand der unabhängigen Ansprüche gelöst. Vorteilhafte Ausführungsformen und Weiterbildungen der Erfindung sind dabei Gegenstand der jeweiligen Unteransprüche.

### Beschreibung der Erfindung

Demgemäß sieht die Erfindung ein Verfahren zur Herstellung eines Glas- oder Glaskeramikartikels mit lokal veränderter Transmission vor, bei welchem ein Glas- oder Glaskeramikartikel bereitgestellt und mittels eines gepulsten Ultrakurzlaser mit einer Pulsdauer von kleiner als 1 ns auf einen Bereich des Glas- oder Glaskeramikartikels lokal begrenzt elektromagnetische Strahlung gerichtet wird, welche vom Glas bzw. der Glaskeramik absorbiert wird, wobei das Glas bzw. die Glaskeramik 1 bis 6 Gew.-% Titanoxid enthält so dass die Transmission im bestrahlten Bereich des Glas- oder Glaskeramikartikels abnimmt. Die Leistungsdichte des Lasers wird dabei so gewählt, dass die Leistungsdichte vorzugsweise unterhalb der Ablationsschwelle des bestrahlen Glases bzw. der Glaskeramik liegt. Die lokal veränderte Transmission wird insbesondere durch einen lokal veränderten Absorptionskoeffzienten verursacht. Vorzugsweise wird demgemäß im bestrahlten Bereich der Absorptionskoeffizient erhöht und damit die Transmission abgesenkt.

Das Verfahren dient dementsprechend vorzugsweise zur Herstellung eines Glas- oder Glaskeramikartikels mit lokal veränderter Absorption.

Weiterhin ist das Verfahren auch auf lichtstreuende oder sogar opake Glaskeramiken anwendbar. Bei derartigen Glaskeramiken ist aufgrund der starken Lichtstreuung im Material die Transmission sehr gering. Wird aber das erfindungsgemäße Verfahren auf solche Werkstoffe angewendet und im Material der Absorptionskoeffizient durch die Bestrahlung lokal erhöht, wird die Remission abgesenkt. Licht, welches in die Glaskeramik eindringt, wird gestreut und tritt teilweise wieder auf der Einstrahlseite wieder aus. Wird der Absorptionskoeffizient lokal erhöht, wird Licht verstärkt absorbiert, bevor es zurück und aus der Glaskeramik heraus gestreut werden kann.

Gemäß einer Ausführungsform der Erfindung ist daher vorgesehen, dass ein lichtstreuender Glaskeramikartikel verwendet, die Glaskeramik mit dem gepulsten Ultrakurzlaser mit einer Pulsdauer von kleiner als 1 ns bestrahlt wird und der Absorptionskoeffizient der Glaskeramik durch die Bestrahlung abgesenkt wird, so dass die Remission für sichtbares Licht im bestrahlten Bereich abgesenkt wird. Bei einem mit diesem Verfahren herstellbaren Glaskeramikartikel ist gemäß einer bevorzugten Ausführungsform die Remission im behandelten Bereich um mindestens 5%, vorzugsweise mindestens 10% abgesenkt. Unter einem lichtstreuenden Glaskeramikartikel wird im Sinne der Erfindung ein transluzenter oder sogar opaker Glaskeramikartikel verstanden. Der Effekt der hier erzielten Abdunkelung in Remission tritt insbesondere bei solchen Glaskeramikartikeln deutlich hervor, bei welchen die Remission im sichtbaren Spektralbereich mindestens so groß ist, wie die Transmission.

Mit dem Verfahren wird ein Glas- oder Glaskeramikartikel, beziehungsweise ein Erzeugnis mit einem volumengefärbten, monolithischen Glas- oder Glaskeramikelement geschaffen, welches einen erste Bereich und einen benachbarten, zweiten Bereich aufweist, wobei die Transmission des zweiten Bereiches, oder auch dessen Remission geringer ist als die Transmission, beziehungsweise Remission des ersten Bereiches.

In einer Ausführungsform ist die Lichtstreuung im Glas oder in der Glaskeramik des zweiten Bereichs höchstens um absolut 20 %, vorzugsweise höchstens um absolut 10 %, besonders bevorzugt höchstens um absolut 5%, insbesondere bevorzugt höchstens um absolut 1% gegenüber der Lichtstreuung im Glas oder in der Glaskeramik des ersten Bereichs höher. Die Lichtstreuung in der Glaskeramik des zweiten Bereichs ist also im Wesentlichen gleich zur Lichtstreuung des ersten, benachbarten Bereichs mit unveränderter Lichttransmission. Unter die Obergrenze einer höchstens um absolut 20 Prozent höheren Lichtstreuung fällt auch der Fall, dass die Lichtstreuung im ersten Bereich kleiner ist, als im zweiten Bereich. Mit der allenfalls geringfügig erhöhten Lichtstreuung tritt diese nicht als sichtbarer Effekt hervor. Die Lichtstreuung ist der Anteil der eingestrahlten Gesamtintensität abzüglich des direkt transmittierten Lichts, der Fresnel-Reflexion und Absorption. Die absolute, in Prozent angegebene Erhöhung der Streuung bezieht sich auf den Anteil des gestreuten Lichts bei der Transmission eines Lichtstrahls. Beträgt der Anteil der gestreuten Lichtintensität im zweiten Bereich beispielsweise 3% der Gesamtintensität, so bedeutet eine Erhöhung um absolut 5% im ersten Bereich dann ein Anteil der gestreuten Lichtintensität im ersten Bereich von 3% + 5% = 8%. Die Begriffe der Transmission, Streuung, Absorption und Remission, wie sie im Sinne der Erfindung verwendet werden, entsprechen den Definitionen gemäß DIN 5036-1 und können mit den Messvorschriften gemäß ISO 15368 bestimmt werden.

Würde nur die Oberfläche des Materials mit dem erfindungsgemäßen Verfahren behandelt, wäre der Effekt der Absorptionsänderung und damit der Transmissionsänderung über das ganze Volumen gesehen oft nur sehr klein und meist nicht ausreichend. Deshalb ist es durch und mit dem erfindungsgemäßen Verfahren durch die Auswahl einer Wellenlänge der Strahlung derart, dass diese im Volumen des Materials absorbiert wird, möglich, nicht nur die Oberfläche sondern simultan zumindest einen bestimmten Bereich des Volumens des Glases aufzuheizen und zu verändern, um den Effekt groß genug zu machen, so dass er dem der Anwendung gewünschten Maße entspricht und um die Oberfläche des Materials während der Behandlung nicht zu überhitzen.

Ein weiteres wichtiges Merkmal der Erfindung ist die Tatsache, dass die Wellenlänge der Einstrahlung nicht der Wellenlänge des erzielten Effektes, also der Wellenlänge, bei welcher die Transmissionsänderung auftritt, entsprechen muss. Bei der vorliegenden Erfindung ist es also möglich, beispielsweise mit einem Laser mit einer Wellenlänge im sichtbaren Spektralbereich, insbesondere im Bereich von 500 nm bis 550 nm einzustrahlen. Der resultierende Effekt kann aber beispielsweise im sichtbaren Bereich zwischen 380 nm und 780 nm liegen und eine Änderung der Transmission bei einer oder mehreren Wellenlängen in diesem Bereich durch physikalisch-chemische Reaktionen der im Glas vorhandenen Elemente und Verbindungen hervorrufen. Dies ist aus der Tatsache geschuldet, dass die eingestrahlte Energie zwar nur mit bestimmten Elementen des Glases oder der Glaskeramik wechselwirkt aber Auswirkungen auf die gesamte Struktur des Glases oder der Glaskeramik hat.

Gemäß einer Weiterbildung der Erfindung wird ein picosekundengepulster Laser mit einer Ausgangsleistung von 8 bis 10 W verwendet. Die Einzelpulsenergie beträgt unabhängig von der Art des Lasers gemäß einer bevorzugten Ausführungsform 5 - 150 µJ pro Puls, vorzugsweise 5 bis 100 µJ/Puls. Demgemäß sind auch beispielsweise UV-Laser mit Pulslängen im Nanosekunden-Bereich und entsprechenden Pulsenergien geeignet, um das Glas oder die Glaskeramik zu bearbeiten.

Die Leistungsdichte des Lasers kann insbesondere über das bestrahlte Volumen so eingestellt werden, dass eine Materialschädigung vermieden wird, die Energiedichte gleichzeitig jedoch ausreicht, um eine Verringerung der Transmission der bestrahlten Bereiche und somit eine Abdunklung der bestrahlten Bereiche zu bewirken.

Gemäß einer Weiterbildung der Erfindung kann das bestrahlte Volumen und somit die Leistungsdichte durch Verschieben des Fokuspunktes des Lasers eingestellt werden. Dabei wird das bestrahlte Volumen umso kleiner und die Leistungsdichte umso höher, je näher der Fokuspunkt des Lasers an der Oberfläche des zu bestrahlenden Werkstücks gelegt wird.

Durch die eingesetzten Leistungsdichten wird eine Materialschädigung vermieden, gleichzeitig ist die Energiedichte jedoch ausreichend, um eine Verringerung der Transmission der bestrahlten Bereiche und somit eine Abdunklung der bestrahlten Bereiche zu bewirken. Mit einem Laserstrahl kann die Strahlungsleistung lokal eng begrenzt im Material eingebracht werden.

Dies ist vorteilhaft, da der Energieeintrag in das Glas bzw. die Glaskeramik zu einer Transmissionsverringerung im bestrahlten Bereich führt, ohne dass dabei das umgebende Material so stark zu erhitzen, dass beispielsweise festigkeitsmindernde Mikrorisse, Phasen- und/oder Volumenänderungen innerhalb des bestrahlten Materials vermieden oder zumindest weitgehend vermieden werden können. Somit kann eine Transmissionsverringerung erreicht werden, ohne oder zumindest weitgehend ohne die mechanischen Eigenschaften des bestrahlten Glas- oder Glaskeramikartikels in nachteiliger Weise zu beeinflussen. Als vorteilhaft zum Einbringen der erforderlichen Leistungs- bzw. Energiedichten in das Material hat sich hierbei die Verwendung insbesondere eines gepulsten Picosekundenlasers herausgestellt.

Insbesondere erfolgt durch die eingestrahlte Strahlung eine zumindest teilweise Umwandlung von farbbildenden Bestandteilen im Glas bzw. in der Glaskeramik in farbgebende Bestandteile. Dadurch wird der Absorptionskoeffizient des Glas- oder Glaskeramikmaterials erhöht.

Unter farbbildenden Bestandteilen im Sinne der Erfindung werden dabei Glas- oder Glaskeramikbestandteile verstanden, die unter der Einwirkung von geeigneter Strahlung bzw. eines geeigneten Energieeintrages zu farbgebenden Bestandteilen umgewandelt werden, wobei die farbgebenden Bestandteile die Transmission verringern. Die farbbildenden Bestandteile beeinflussen gemäß einer Ausführungsform der Erfindung die Transmission des Glas- oder Glaskeramikartikels, insbesondere die Transmission im sichtbaren Bereich (380 bis 780 nm) dabei nicht oder nicht wesentlich.

Die eingestrahlte Energie kann dabei durch die farbbildenden Bestandteile absorbiert werden. Es ist jedoch auch möglich, dass die eingestrahlte Energie zunächst durch andere Bestandteile des bereitgestellten Glas- oder Glaskeramikartikels absorbiert und durch nachfolgende Prozesse auf die farbbildenden Bestandteile übertragen wird. Insbesondere können auf Grund der hohen eingestrahlten Leistungsdichten nicht-lineare optische Effekte auftreten. Es ist hierbei denkbar, dass an der Energieübertragung weitere Bestandteile des Glases bzw. der Glaskeramik beteiligt sind.

Eine Ausführungsform der Erfindung sieht vor, dass mittels eines Laserscanners in einem Scanvorgang der Laserstrahl über die Oberfläche des Glas- oder Glaskeramikartikels gerastert wird, so dass ein Bereich bestrahlt wird, dessen Oberfläche größer ist als der Lichtfleck des Laserstrahls auf der Oberfläche des Glas- oder Glaskeramikartikels. Durch eine entsprechende Programmierung des Laserscanners können somit auch Bereiche entsprechend der einprogrammierten Geometrien, beispielsweise Firmenlogos oder andere optische Markierungen, bestrahlt werden. So können, z. B. auf Kochflächen oder Kaminsichtscheiben Designelemente, Firmenlogos und flächige Dekorierungen über das gesamte Volumen, d.h. von Oberfläche zu Oberfläche des Glas- oder Glaskeramikartikels, eingebracht werden.

Im Unterschied zu konventionellen Markierungsverfahren besteht beim erfindungsgemäßen Verfahren keine Notwendigkeit, den Laser punktförmig im Material zu fokussieren. Um eine im Volumen des bereitgestellten Glas-oder Glaskeramikartikels ausgebreitete Transmissionsänderung bzw. eine Volumenfärbung im bestrahlten Bereich zu erzielen, reicht die Wahl einer Fokusebene des Lasers außerhalb der Materialdicke aus.

Eine Ausführungsform der Erfindung sieht daher vor, dass die Fokusebene über oder unter die Oberfläche des bereitgestellten Glas- oder Glaskeramikartikels gelegt wird. Ein relativer Abstand der Fokusebene des Lasers zur Oberfläche des Glas- oder Glaskeramikartikels im Bereich von 2 mm bis 10 mm, insbesondere im Bereich von 4 mm bis 8 mm hat sich als besonders vorteilhaft herausgestellt. Zur Erzeugung einer Abdunklung im gesamten Volumen des bestrahlten Bereiches ist lediglich eine Abrasterung der Fläche, nicht jedoch eine Abrasterung der Tiefe notwendig. Der Fokuspunkt, d.h. der Abstand der Fokusebene zur Oberfläche des Glas- oder Glaskeramikartikels kann jedoch gemäß einer weiteren Ausführungsform während des Scannvorgangs geändert werden, beispielsweise um die Homogenität der Transmissionsverringerung innerhalb des bestrahlten Volumens zu erhöhen oder um dreidimensionale Effekte zu erzielen. So kann der Fokuspunkt ober- oder unterhalb des Werkstückes, d.h. des Glas- oder Glaskeramikelementes, liegen. Durch die Positionierung des Laserfokus (oberhalb oder unterhalb des Werkstückes) sowie die Entfernung des Fokuspunktes von der Oberfläche des Glas- oder Glaskeramikelementes kann die Intensität der Abdunklung bzw. Transmissionsänderung beeinflusst werden. So ist beispielsweise die Intensität der Abdunklung bei einem Fokuspunkt unterhalb des Glas- oder Glaskeramikelementes stärker als bei einem entsprechenden, gleichgroßen Fokus oberhalb des Glas- oder Glaskeramikelementes. So kann durch Variation der Leistungsdichte bzw. Änderung des Fokusabstandes während der Bestrahlung über die Dicke des Werkstückes unterschiedlich intensive Einfärbungen bzw. Abdunklungen erzeugt werden. Somit können beispielsweise dreidimensionale optische Effekte im Glas- oder Glaskeramikelement erzeugt werden.

Zur Erzielung von dreidimensionalen Effekten sieht eine vorteilhafte Ausgestaltung vor, den Laserfokus hinter den zu bestrahlenden Glas- oder Glaskeramikartikel zu legen und die Tiefe von der Rückseite des Artikels hin zur Oberseite des Artikels abzurastern.

In einer Weiterbildung der Erfindung wird der bestrahlte Bereich mehrfach mit dem Laserscanner überfahren. Durch mehrfaches Abscannen der bestrahlten Bereiche kann insbesondere die Intensität der Transmissionsverringerung bzw. Abdunklung erhöht werden. Durch Variation der Anzahl der Scanvorgänge können beispielsweise bestrahlte Bereiche mit unterschiedlich stark ausgeprägten Abdunklungen erhalten werden. Die Erfinder haben in diesem Zusammenhang herausgefunden, dass in diesem Zusammenhang ein Sättigungseffekt beobachtet werden kann. So nimmt die Transmission im bestrahlten Bereich mit steigender Anzahl der Überfahrten des Laserscanners langsamer ab und nähert sich einem minimalen Transmissionswert als End-Transmission bzw. einer Sättigungsgrenze. In einer Ausführungsform nähert sich die Transmission asymptotisch einer Sättigungsgrenze an.

Eine Weiterbildung der Erfindung sieht vor, dass die Leistungsdichte des Laser so eingestellt wird, dass eine Schädigung des Materials, beispielsweise durch Materialabtrag oder Mikrorisse, oder eine Morphologieänderung des bestrahlten Bereiches, beispielsweise bei Glaskeramikartikeln eine Umwandlung der Kristallphase, vermieden werden. Der bereitgestellte Glas- oder Glaskeramikartikel enthält Titanoxid zu einem Anteil an der Zusammensetzung im Bereich von 1 bis 6 Gewichtsprozent (Gew.-%) als farbbildender Bestandteil, welcher durch die Laserstrahlung in farbgebende Bestandteile umgewandelt wird. In einer Ausführungsform der Erfindung enthält der bereitgestellte Glas- oder ein Glaskeramikartikel zumindest eines der folgenden Elemente Zinn, Eisen, Vanadium, Chrom, Cer, Neodym, Europium, Mangan, Kobalt, Nickel, Zink, Arsen, Antimon, Kupfer, Silber und/oder Gold. Es wird davon ausgegangen, dass die Absenkung der Transmission durch laserinduzierte Änderung des Oxidationszustands der farbbildenden Metallionen hervorgerufen wird.

Die Zusammensetzung des Glases bzw. der Glaskeramik hat dabei einen Einfluss auf die Ausprägung der Färbung. So kann beispielsweise durch die Bestrahlung von titanhaltigen Glaskeramiken eine graue oder grau-bläuliche Abdunklung erhalten werden.

Eine Weiterbildung der Erfindung sieht vor, dass ein Glasartikel, insbesondere ein Kalknatronglas bereitgestellt wird.

In einer Weiterbildung der Erfindung wird ein Glaskeramikartikel, bevorzugt eine LAS-Glaskeramik mit Hochquarzmischkristall als vorherrschende Kristallphase bereitgestellt. Bevorzugt wird eine transparente Glaskeramik, wie beispielsweise eine Glaskeramik der Marke Robax oder Cleartrans bereitgestellt.

Gemäß einer anderen Ausführungsform der Erfindung wird ein Glaskeramikartikel im Grünglaszustand bestrahlt, wobei die Keramisierung des Grünglases in einem nachfolgenden Verfahrensschritt erfolgt. Auch eine Keramisierung während der Bestrahlung ist möglich.

Eine weitere Ausführungsform sieht die Bereitstellung eines volumengefärbten Glas- oder Glaskeramikartikels vor. So ist es möglich, mit dem erfindungsgemäßen Verfahren auch die Transmission bereits gefärbte Gläser bzw. Glaskeramiken weiter zu reduzieren bzw. die volumengefärbten Glas- oder Glaskeramikartikel in den bestrahlten Bereichen weiter abzudunkeln. Insbesondere können mit dem Verfahren vanadiumhaltige, volumengefärbte Glaskeramiken weiter abgedunkelt werden.

In einer Weiterbildung der Erfindung wird durch die Bestrahlung die integrale Lichttransmission des sichtbaren Spektralbereiches (380 nm bis 780 nm) im bestrahlten Bereich relativ zum unbestrahlten Bereich um zumindest 2 %, bevorzugt um zumindest 3,5 % und besonders bevorzugt um zumindest 5 % verringert. Es können auch deutlich größere Senkungen der integralen Lichttransmission erzielt werden. Vorzugsweise wird durch die Bestrahlung die integrale Lichttransmission des sichtbaren Spektralbereiches (380 nm bis 780 nm) im bestrahlten Bereich relativ zum unbestrahlten Bereich um zumindest 10%, oder auch um zumindest 15 %, oder sogar um zumindest 20% gesenkt.

Durch die Wahl der Strahlungsquelle und die Form der Einbringung der Energie kann der Bereich der Transmissionsänderung von punktförmig über linienförmig bis zu flächig sein. Dabei meint punktförmig nur die geometrische Abbildung des Laserstrahls auf der Oberfläche, jedoch nicht die Fokussierung in Form eines räumlichen Punktes. Über die Dicke des Materials kann also die Form ein Zylinder oder ein Kegel mit spitzem Winkel sein. Bei einer punktförmigen Einbringung der Energie kann durch Bewegung der Strahlungsquelle oder Bewegung des Bauteils der Bereich der Transmissionsänderung eine beliebige Form annehmen, z.B. Buchstaben, Zeichen oder auch Dreiecke, Vierecke oder beliebige andere geometrische Formen. Die Abmaße der Bereiche mit Transmissionsänderung können von Durchmesser 0,1 mm bis zu einer Fläche von mehreren Quadratmetern variieren.

Gemäß einer vorteilhaften Ausgestaltung der Erfindung wird im gesamten sichtbaren Spektralbereich die integrale Lichttransmission verringert. Insbesondere erfolgt die Verringerung der Lichttransmission über den gesamten sichtbaren Spektralbereich gleichmäßig, so dass die bestrahlen Bereiche eine Graufärbung aufweisen. Somit unterscheiden sich Gläser, die mit dem erfindungsgemäßen Verfahren behandelt wurden, von Gläsern oder Glaskeramiken, die durch Solarisationseffekte eingefärbt wurden und meist eine ausgeprägte Verringerung der Transmission im UV-Bereich sowie eine sichtbare Braunfärbung aufweisen.

Gemäß einer Ausführungsform der Erfindung variiert die Abnahme der integralen Transmission, insbesondere der Unterschied der Abnahme innerhalb des Wellenlängenbereiches von 380 bis 780 nm um maximal 30%, besonders bevorzugt um maximal 20% oder sogar um maximal 15 %, wobei es sich bei den angegebenen Werten um absolute Unterschiede handelt.

Dies ist vorteilhaft, da somit die bestrahlten Bereiche einem Betrachter zwar dunkler erscheinen, der Farbeindruck jedoch weitgehend unverändert ist. Insbesondere können somit beispielsweise Lichtquellen wie LEDs beim Durchscheinen durch die bestrahlten Bereiche abgedunkelt werden, während sich der Farbeindruck für einen Betrachter nicht oder nicht merklich ändert.

Die Erfinder haben herausgefunden, dass durch eine thermische Nachbehandlung eines erfindungsgemäß behandelten Glas- oder Glaskeramikartikels die Transmissionsänderung ganz oder teilweise rückgängig gemacht werden kann. Abhängig von der gewählten Temperatur und der Dauer der thermischen Nachbehandlung kann beispielsweise durch thermische Nachbehandlung eine Feineinstellung der Farbgebung oder eine vollständige, rückstandsfreie Entfernung des Farbeffektes erfolgen.

So führte beispielsweise eine einstündige thermische Nachbehandlung einer erfindungsgemäß behandelten, transparenten Glaskeramik bei einer Temperatur von 400°C zu einer weitgehenden Entfärbung der zuvor eingefärbten Bereiche.

So ist es beispielsweise möglich, mit dem erfindungsgemäßen Verfahren Markierungen zum Herkunftsnachweis und/oder zur Qualitätssicherung in Glas- oder Glaskeramikartikel einzubringen, die durch thermische Behandlung in einfacher Art und Weise, beispielsweise im Falle einer markierten Kaminsichtscheibe sogar durch Inbetriebnahme des Kamins durch den Endkunden, beseitigt werden können.

Des Weiteren betrifft die Erfindung ein Erzeugnis mit einem Glas- oder Glaskeramikelement, insbesondere herstellbar mit dem erfindungsgemäßen Verfahren, welches einen ersten Bereich und einen benachbarten, zweiten Bereich aufweist, wobei der zweite Bereich einen geringeren Flächenanteil an der Oberfläche des Glas- oder Glaskeramikelements einnimmt, als der erste Bereich, und stärker als der erste Bereich volumengefärbt ist, beziehungsweise einen höheren Absorptionskoeffizienten aufweist. Der zweite Bereich weist dabei zumindest einen ersten farbgebenden Bestandteil auf, wobei der erste farbgebende Bestandteil den Absorptionskoeffizienten des zweiten Bereichs und damit die integrale Lichttransmission im sichtbaren Spektralbereich des zweiten Bereichs oder die integrale Remission reduziert. Die integrale Lichttransmission im sichtbaren Spektralbereich im zweiten Bereich ist gegenüber dem ersten Bereich reduziert. Der erste und der zweite Bereich weisen eine gemeinsame Gefügestruktur auf. Mit dieser gemeinsamen Gefügestruktur und die nur durch Laserbestrahlung geänderten optischen Eigenschaften geht dabei auch typischerweise einher, dass der erste und zweite Bereich, anders etwa als beim Aneinanderfügen verschieden gefärbter Gläser die gleiche Zusammensetzung aufweisen.

Gemäß einer Ausführungsform der Erfindung weist das Glas-oder Glaskeramikelement einen Anteil des zweiten Bereichs von höchstens 49%, bevorzugt höchstens 30% und besonders bevorzugt höchstens 10% bezogen auf das Volumen des Glas-oder Glaskeramikelementes auf.

Der Unterschied zwischen der integralen Lichttransmission im sichtbaren Spektralbereich im ersten Bereich und der integralen Lichttransmission wird insbesondere durch zumindest einen ersten farbgebenden Bestandteil hervorgerufen, während Streueffekte sich nicht oder allenfalls in geringem Maße auf den Transmissionsunterschied zwischen erstem und zweiten Bereich auswirken. So sieht eine Ausführungsform der Erfindung vor, dass die Lichtstreuung im Glas oder in der Glaskeramik des zweiten Bereichs höchstens um absolut 20 %, vorzugsweise höchstens um absolut 10 % gegenüber der Lichtstreuung im Glas oder in der Glaskeramik des ersten Bereichs höher ist.

Eine Weiterbildung der Erfindung sieht vor, dass das Glas oder die Glaskeramik zumindest eines der folgenden Elemente in ionischer und/oder metallischer Form enthält: Zinn, Eisen, Vanadium, Chrom, Cer, Neodym, Europium, Mangan, Kobalt, Nickel, Zink, Arsen, Antimon, Kupfer, Silber und/oder Gold.

In einer Weiterbildung der Erfindung ist die die integrale Lichttransmission im sichtbaren Spektralbereich des zweiten Bereichs um zumindest 2 %, bevorzugt um zumindest 3,5% und besonders bevorzugt um zumindest 5% geringer ist als die Lichttransmission im ersten Bereich. Gemäß einer bevorzugten Ausführungsform ist der Unterschied in der integralen Lichttransmission des ersten und des zweiten Bereiches über den gesamten sichtbaren Spektralbereich weitgehend konstant.

Insbesondere beträgt der Unterschied der Transmission (τ₁-τ₂) / (τ₁ + τ₂) mit τ₁ als Transmission des ersten Bereiches und mit τ₂ als Transmission des zweiten Bereiches über den sichtbaren Spektralbereich maximal 20%, bevorzugt maximal 12%, besonders bevorzugt maximal 7% (absolute Unterschiede).

Ein gleichbleibender oder zumindest weitgehend gleichbleibender Transmissionsunterschied (τ₁-τ₂) / (τ₁ + τ₂) zwischen erstem und zweitem Bereich über den gesamten sichtbaren Spektralbereich ist vorteilhaft, da somit einem Betrachter der zweite Bereich gegenüber dem ersten Bereich abgedunkelt erscheint, wobei die Abdunklung jedoch farbneutral ist. Mit anderen Worten ausgedrückt weisen der erste und der zweite Bereich in dieser Ausführungsform den gleichen Farbton bzw. Farbort auf, wobei der zweite Bereich dunkler als der erste Bereich ist. So kann das erfindungsgemäße Glas- oder Glaskeramikelement beispielsweise einen transparenten, farblosen ersten Bereich und einen zweiten Bereich, der einen grauen bis schwarzen Farbton aufweist, umfassen. Der Transmissionsgrad des zweiten Bereiches innerhalb des Spektralbereiches von 380 nm bis 780 nm ist dabei abhängig von dem gewünschten Abdunklungseffektes des zweiten Bereiches gegenüber dem ersten Bereich. Zu einen ausgeprägten Abdunklungseffekt zu erhalten, ist es vorteilhaft, wenn im ersten Bereich die spektrale Transmission innerhalb des gesamten Spektralbereichs zwischen 380 Nanometern und 780 Nanometern um zumindest 2%, bevorzugt um zumindest 3,5%, besonders bevorzugt zumindest 5% höher als im zweiten Bereich ist.

Der zweite Bereich kann sich von einer ersten bis zu einer zweiten, gegenüberliegenden Oberfläche des Glas- oder Glaskeramikelements erstrecken. Eine andere Ausführungsform sieht dagegen vor, dass zumindest ein zweiter Bereich vollständig von einem ersten Bereich umschlossen wird, d.h. der entsprechende zweite Bereich im Inneren eines ersten Bereiches platziert ist.

In einer Ausführungsform sieht vor, dass der zweite Bereich als zumindest eine zweidimensionale Struktur im ersten Bereich ausgebildet ist. So können, z.B. auf Kochflächen oder Kaminsichtscheiben, Designelemente, Firmenlogos und flächige Dekorierungen über das gesamte Volumen (von Oberfläche zu Oberfläche) eingebracht werden. Auch dreidimensionale Effekte sind möglich. So sieht eine andere Ausführungsform vor, dass der zweite Bereich als zumindest eine dreidimensionale Struktur im ersten Bereich ausgebildet ist.

In einer Weiterbildung der Erfindung handelt es sich bei dem Glas- oder Glaskeramikelement um eine Glaskeramik, insbesondere um eine Aluminiumsilikatglaskeramik.

Die ersten Bereiche des Glas- oder Glaskeramikelementes sind in einer Ausführungsform transparent. Insbesondere weisen die ersten Bereiche eine integrale Lichttransmission τ_{VIS} von zumindest 70% auf.

Eine andere Ausführungsform sieht vor, dass das Glas- oder Glaskeramikelement volumengefärbte erste Bereiche aufweist. Beispielsweise kann die Volumenfärbung des ersten Bereiches durch färbende, polyvalente Metallionen wie Vanadiumionen hervorgerufen werden.

Der erste Bereich und der zweite Bereich des Glas- oder Glaskeramikelementes weisen eine gemeinsame Gefügestruktur auf. Bevorzugt weist die Gefügestruktur im Wesentlichen keine Spannungen zwischen ersten und zweiten Bereichen auf.

So konnten in einer Ausführungsform mittels Polfilteranalyse keine Spannungen detektiert werden.

In einer Weiterbildung der Erfindung unterscheidet sich die Remission des ersten Bereichs für sichtbares Licht von der Remission des zweiten Bereichs um höchstens absolut 20 %, vorzugsweise um höchstens absolut 10 %, besonders bevorzugt um höchstens absolut 5 %.

Die Erfinder gehen davon aus, dass die Transmissionsunterschiede zwischen erstem und zweiten Bereich sind insbesondere nicht auf zusätzliche Streuzentren, beispielsweise Mikrorisse oder andere Defekte im zweiten Bereich zurückzuführen sind.

Die Erfindung, beziehungsweise erfindungsgemäße Glas- oder Glaskeramikartikel können in den Bereichen Faseroptik, Pharmaverpackung, Haushaltsgeräte, Optik, Flachglas, u.a., insbesondere interessant sein für folgende Anwendungen:
- Einbringen eines 1D (Balken) oder 2D (Dot Matrix) Barcodes in die Glaswand (z.B. eines Vials / einer Spritze) zur dauerhaften Kennzeichnung,
- Einbringen einer Füllmengenskala oder Füllhöhenmarkierung oder einer anderen Markierung in die Glaswand eines Behälters (z.B. einem Vial, einem Rohr oder einer Spritze),
- Einbringen von optischen Designelementen in Flachgläser (z.B. Architekturverglasung) wie Firmenlogos oder geometrische Objekte (Pfeile als Wegweiser, Fluchtweg),
- dauerhafte fälschungssichere Markierung von Produkten durch ein Logo im Volumen des Glases,
- Einbringen von Piktogrammen, Buchstaben, geometrischen Objekten in Touch-Anwendungen für Mobiltelefon-Abdeckungen oder anderen elektronischen Geräten,
- Einbringen von flächigen Abdunklungen, beispielsweise zur Verdeckung von Gerätebauteilen (beispielsweise Abdunklung von transparenten Glaskeramikkochflächen)

### Detaillierte Beschreibung der Erfindung

Die Erfindung wird nachfolgend anhand von Ausführungsbeispielen und der beigeschlossenen Figuren näher erläutert. Dabei verweisen in den Figuren gleiche Bezugszeichen auf gleiche oder entsprechende Elemente.

Es zeigen:
Fig. 1 eine Vorrichtung zur Durchführung des erfindungsgemäßen Verfahrens,
Fig. 2 Transmissionsspektren eines ersten und eines zweiten Bereichs eines Ausführungsbeispiels,
Fig. 3 Transmissionsspektren behandelter Bereiche in Abhängigkeit vom Abstand der Fokusebene des Lasers und
Fig. 4 die Transmissionsspektren eines zweiten Bereiches in Abhängigkeit von der Anzahl der Bestrahlungsvorgänge.
Fig. 5 den Verlauf des Unterschieds der in Fig. 2 gezeigten Transmissionsspektren,
Fig. 6 zwei Transmissionsspektren und deren Unterschied gemäß einem weiteren Ausführungsbeispiel,
Fig. 7 ein Ausführungsbeispiel eines erfindungsgemäß behandelten lichtstreuenden Glaskeramikelements,
Fig. 8 eine Variante des in Fig. 7 gezeigten Ausführungsbeispiels mit abladierter Oberfläche.

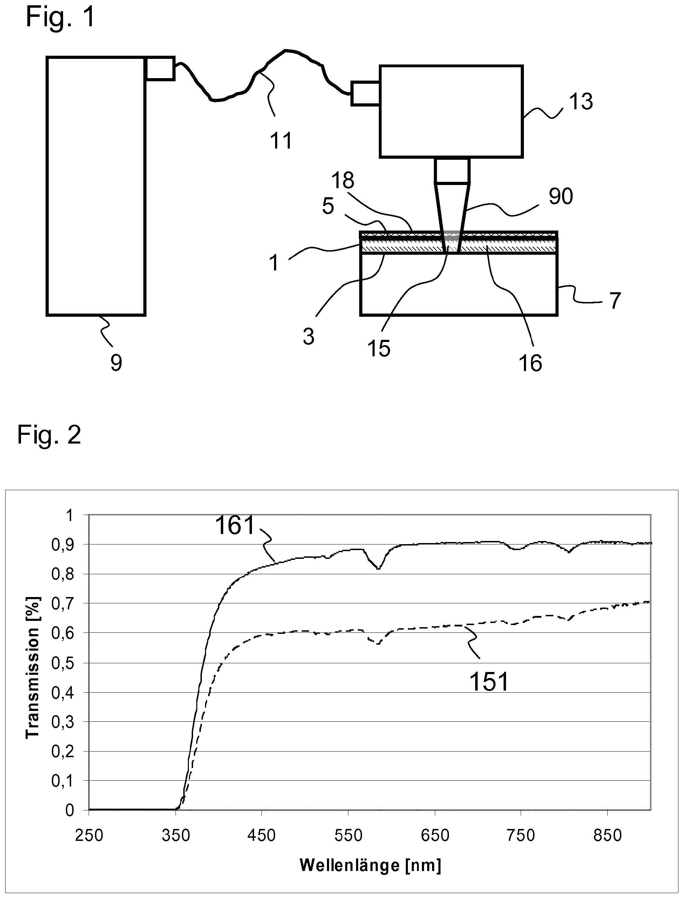

Das erfindungsgemäße Verfahren zur Herstellung eines Glas-oder Glaskeramikartikels mit lokal veränderter Transmission wird anhand von Fig. 1 näher erläutert. Es wird eine keramisierte Glaskeramikplatte 1 mit einer ersten Seite 3 und einer zweiten Seite 5 und den Abmessungen 50 mm x 50 mm und 4 mm Dicke bereitgestellt. Die Glaskeramikplatte 1 kann, wie dies üblich ist, einseitig genoppt ausgeführt sein. Die Glaskeramik enthält dabei farbbildende Bestandteile. Bevorzugt handelt es sich dabei um eine transparente Glaskeramik.

Die Glaskeramikplatte 1 wird auf einer im Schlickerguss hergestellten Siliziumoxid-Keramikunterlage 7 mit 100 mm x 100 mm und 30 mm Dicke platziert. Die auf der Siliziumoxid-Keramikunterlage 7 aufliegende erste Seite 3 ist beispielsweise die glatte Oberseite der Glaskeramikplatte 1. Die nach oben weisende zweite Seite 5 ist dann die genoppte Unterseite.

Siliziumoxid-Keramikunterlage 7 und Glaskeramikplatte 1 sind auf Raumtemperatur. Über dieser Anordnung ist ein Laser-Scanner 13 mit einer fokussierenden Optik, Brennweite 250 mm, so installiert, dass der Laserstrahl 90 senkrecht zur Oberfläche der Glaskeramikplatte 1 auftrifft. Im Fokus beträgt der Durchmesser des Laserstrahls 90 1,5 mm. Die Anordnung aus Siliziumoxid-Keramikunterlage 7 und Glaskeramikplatte 1 wird in einer solchen Entfernung platziert, dass die Glaskeramikplatte 1 nicht im Fokus des Laserstrahls 90 liegt und der Laserstrahl mithin defokussiert ist. Im Ausführungsbeispiel weist der Laserstrahl 90 auf der Glaskeramikplatte 1 einen Durchmesser von 10 mm auf. Über eine Übertragungsfaser 11 wird dem Laserscanner 13 Laserstrahlung eines Lasers 9 mit einer Wellenlänge zwischen 500 nm und 550 nm zugeführt. Als Laser 9 dient dabei ein frequenzverdoppelter, picosekundengepulster Nd:YAG-Laser. Die Ausgangsleistung beträgt 8 W, die Pulslänge 20 ps. Allgemein, ohne Beschränkung auf das Ausführungsbeispiel werden Laser mit einer Wellenlänge im Spektralbereich von 355 nm bis 1100 nm, vorzugsweise im sichtbaren Spektralbereich bevorzugt. Gemäß einer Ausführungsform wird, wie oben genannt, ein Laser mit einer Wellenlänge im Bereich von 500 bis 550 nm verwendet. Gemäß einer weiteren Ausführungsform kann auch ein Laser mit einer Wellenlänge im ultravioletten Spektralbereich bis zu den oben genannten 355 nm Wellenlänge eingesetzt werden.

Im lokalen Bereich 15, welcher durch den Laserstrahl 90 bestrahlt wurde, ist die Transmission lokal über die gesamte Dicke der Platte deutlich niedriger geworden, d.h. sichtbare Strahlung kann schlechter durch die Glaskeramikplatte 1 gelangen. Benachbarte Bereiche 16 der Platte, beziehungsweise der übrige Teil der Glaskeramikplatte 1 bleibt transparent und unverändert in der Farbe, d.h. behält seine hohe Transmission im sichtbaren Bereich. Die Glaskeramikplatte 1 ist außerdem geometrisch unverändert, insbesondere auch im Bereich 15 der Einstrahlung. Dies betrifft sowohl die Ebenheit als auch lokale Dickenschwankungen.

Mittels eines Laserscanners kann der Laserstrahl gemäß einer weiteren Ausführungsform auch über die Oberfläche des Glas- oder Glaskeramikartikels gerastert werden, so dass ein Bereich 15 bestrahlt wird, dessen Oberfläche größer ist als der Lichtfleck des Laserstrahls auf der Oberfläche des Glas- oder Glaskeramikartikels.

Bei dem ersten Ausführungsbeispiel erstreckt sich der zweite Bereich von der ersten Seite 3 als erste Oberfläche bis zur zweiten Seite 5 als zweiter Oberfläche.

Fig. 2 zeigt die spektralen Transmissionsgrade einer erfindungsgemäß behandelten, transparenten, 4 mm dicken Glaskeramik-Platte als Funktion der Wellenlänge. Die Kurve 151 in Fig. 2 bezeichnet dabei den spektralen Transmissionsgrad eines erfindungsgemäß behandelten Bereichs 15, d.h. eines zweiten Bereichs der Glaskeramikplatte, Kurve 161 den spektralen Transmissionsgrad eines benachbarten, unbehandelten (d.h. eines ersten) Bereichs 16.

Anhand der beiden Kurven wird ersichtlich, dass im behandelten, zweiten Bereich 15 die Transmission über den gesamten sichtbaren Spektralbereich geringer ist als im unbehandelten, ersten Bereich 16, wobei die Transmissionsunterschiede zwischen erstem und zweitem Bereich über den gesamten sichtbaren Spektralbereich relativ konstant sind.

Dies ist von Vorteil, wenn weniger der Farbton beeinflusst, sondern die Durchsicht vermindert werden soll, um etwa gezielt Bereiche des Glas- oder Glaskeramikelement abzudunkeln. Gemäß einer Weiterbildung der Erfindung und ohne Beschränkung auf das spezielle Ausführungsbeispiel ist im ersten Bereich daher die spektrale Transmission innerhalb des gesamten Spektralbereichs zwischen 380 nm und 780 nm höher als in einem benachbarten, zweiten Bereich.

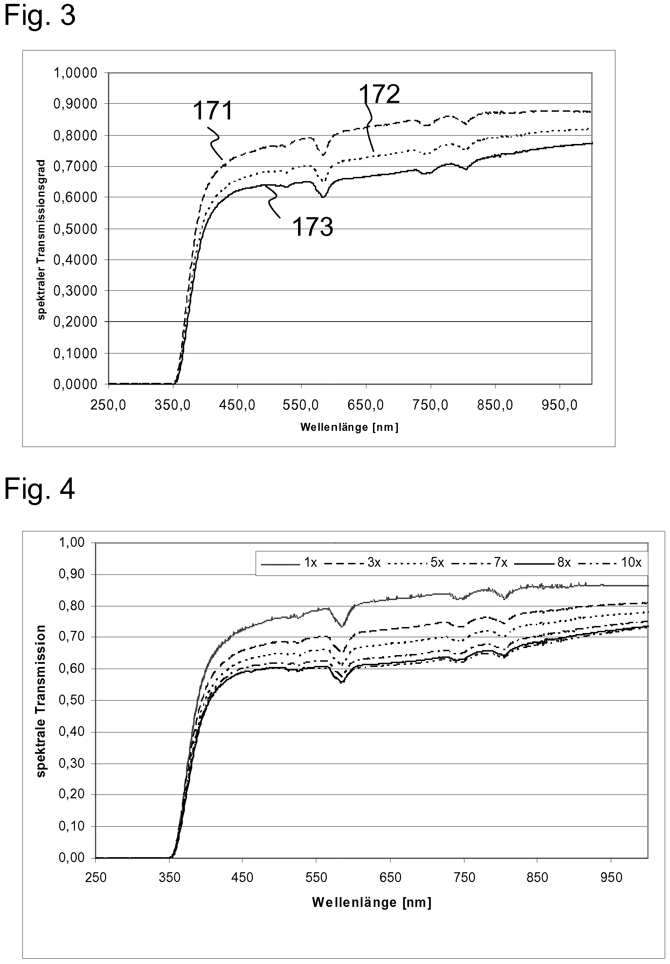

Fig. 3 zeigt die Transmissionsspektren eines weiteren Ausführungsbeispiels in Abhängigkeit von dem gewählten Fokusabstand des Lasers zur Oberfläche des Werkstückes. Bei dem Werkstück handelt es sich in diesem Ausführungsbeispiel um eine transparente Glaskeramikplatte mit einer Dicke von 4 mm. Die Kurven 171, 172 und 173 zeigen die Transmissionsspektren verschiedener bestrahlter Bereiche, wobei jeder Bereich mit einem anderen Fokusabstand bestrahlt wurde. Kurve 171 zeigt das Transmissionsspektrum eines bestrahlten Bereiches, wobei während der Bestrahlung der Fokusabstand weiter von der Oberfläche der Glaskeramik entfernt war als bei der Bestrahlung der Bereiche, deren Transmissionsspektren durch die Kurven 172 und 173 gezeigt wird. Fig. 3 zeigt, dass mit geringerem Fokusabstand die Tranmissionsverringerung intensiviert wird, d.h. die Intensität der Einfärbung nimmt zu, je näher der Fokus des Lasers an die Oberfläche der Glaskeramik bzw. allgemein des Werkstücks gelegt wird, da somit auch die Leistungsdichte des Lasers erhöht wird.

Fig. 4 zeigt den spektralen Transmissionsgrad bestrahlter Bereiche (bzw. zweiter Bereiche) in Abhängigkeit von der Anzahl der erfolgten Bestrahlungs- bzw. Laserscannüberfahrten. Mit steigender Anzahl der Scannerüberfahrten erfolgt eine Verringerung der Transmission und somit eine Intensivierung des Abdunklungseffektes. Jedoch sinkt die Transmission des prozessierten Volumens mit steigender Anzahl der Wiederholungen bzw. Laserscannüberfahrten zunehmend pro Wiederholung weniger stark und nähert sich einer End-Transmission. So ist der Unterschied der Transmissionsgrade nach 8 und nach 10 Scannerüberfahrten wesentlich geringer als nach 5 und 7 Scannerüberfahrten.

Wie oben dargelegt, ist anhand der beiden in Fig. 2 gezeigten Kurven ersichtlich, dass im behandelten, zweiten Bereich 15 die Transmission über den gesamten sichtbaren Spektralbereich abgesenkt ist, wobei die Transmissionsunterschiede zwischen erstem und zweitem Bereich über den gesamten sichtbaren Spektralbereich relativ konstant sind.

Dies ist von Vorteil, wenn weniger der Farbton beeinflusst, sondern die Durchsicht vermindert werden soll, um etwa gezielt Bereiche des Glas- oder Glaskeramikelements abzudunkeln. Gemäß einer Weiterbildung der Erfindung und ohne Beschränkung auf das spezielle Ausführungsbeispiel ist im ersten Bereich daher die spektrale Transmission innerhalb des gesamten Spektralbereichs zwischen 400 nm und 780 nm höher als in einem behandelten zweiten Bereich.

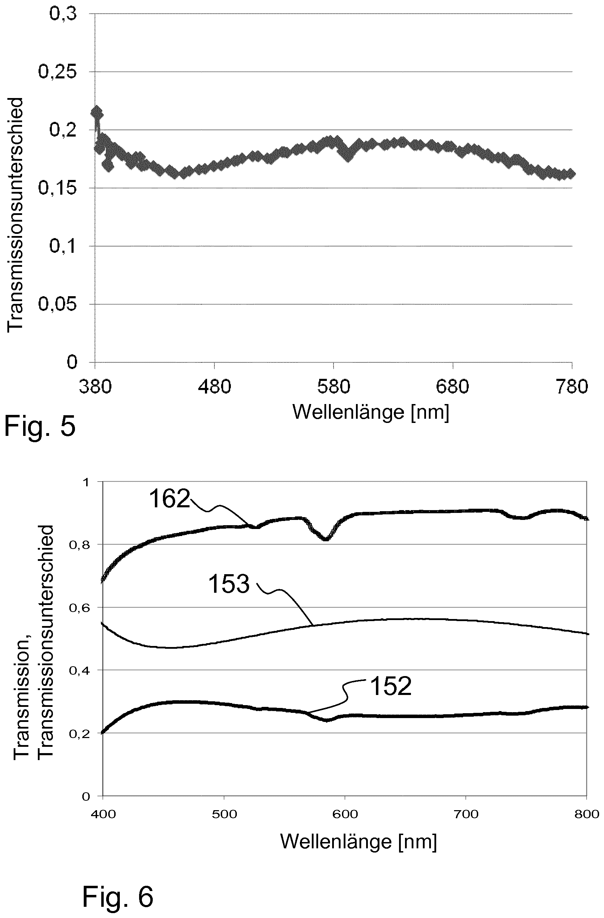

Fig. 5 zeigt dazu den Unterschied (τ₁ - τ₂) / (τ₁ + τ₂) der beiden Kurven 151, 161 aus Fig. 2 für den sichtbaren Spektralbereich zwischen 400 nm und 780 nm Wellenlänge. Die Kurven 151, 161 sind wellenlängenabhängige Transmissionen τ₁(λ), beziehungsweise τ₂(λ). Wie aus Fig. 5 ersichtlich, schwankt der Unterschied über den dargestellten Spektralbereich nur wenig. Die Schwankung beträgt hier nur etwas weniger als 17% bezogen auf den Mittelwert im Wellenlängenbereich von 400 nm bis 780 nm.

Ohne Beschränkung auf das Ausführungsbeispiel der Fig. 5 ist daher allgemein in Weiterbildung der Erfindung vorgesehen, dass der Unterschied der Transmission (τ₁(λ)-τ₂(λ))/(τ₁(λ)+τ₂(λ)) mit τ₁(λ) als Transmission des ersten Bereiches 16 für eine bestimmte Wellenlänge λ und mit τ₂ als Transmission eines zweiten, benachbarten Bereiches 15 für diese Wellenlänge bei einer Variation der Wellenlänge über den sichtbaren Spektralbereich, vorzugsweise im Spektralbereich von 400 nm bis 780 nm um maximal 30%, vorzugsweise maximal 20% bezogen auf den Mittelwert des Unterschieds der Transmission schwankt.

Fig. 6 zeigt ein weiteres Beispiel zum im sichtbaren Spektralbereich im Wesentlichen gleich bleibenden Unterschied der Transmission. Das Spektrum 162 ist die Transmission τ₁(λ) eines unbehandelten ersten Bereichs 16 einer 4 mm dicken Glaskeramikplatte. Das Spektrum 162 ist die Transmission τ₁(λ) eines erfindungsgemäß mit einem Laser bestrahlten zweiten Bereichs 15 der Platte. Die Kurve 153 ist der zugehörige Unterschied (τ₁(λ)-τ₂(λ))/(τ₁(λ)+τ₂(λ)) der beiden Kurven.

Der Mittelwert dieses Unterschieds liegt im Wellenlängenbereich von 400 bis 780 nm bei 0,528 und die Schwankung, also die Differenz von Maximal- und Minimalwert im genannten Wellenlängenbereich liegt bei 0,0927. Damit ergibt sich eine Schwankung von 0,0927/0,528=0,1756 also von unter 18%.

Dabei ist die Transmissionsänderung in diesem Beispiel sogar erheblich. Der Mittelwert der Transmission der Kurve 162 liegt bei 0,8643 und der Mittelwert der Transmission des abgedunkelten zweiten Bereichs 15 (Kurve 153) bei 0,2667. Damit ergibt sich eine Absenkung der Transmission von 30,8 %.

Bei den Ausführungsbeispielen der Fig. 2 bis Fig. 5 wurde eine transparente Glaskeramikplatte verwendet. Die Erfindung ist aber in gleicher Weise auch auf lichtstreuende Glaskeramikelemente anwendbar. Ist die Lichtstreuung derart, dass Licht bei Einstrahlung auf einer Seite auch auf der gegenüberliegenden Seite nach Streuung austritt, handelt es sich um eine transluzente, beziehungsweise durchscheinende Glaskeramik. Die Lichtstreuung kann aber auch so groß sein, dass nur wenig oder gar kein Licht zur gegenüberliegenden Seite gelangt. In diesem Fall wird von einer opaken Glaskeramik gesprochen. Transluzente oder opake Glaskeramiken sind beispielsweise Aluminosilikatglaskeramiken, insbesondere Lithium-Aluminosilikat-Glaskeramiken, welche einen hohen Anteil an Keatit-Mischkristall aufweisen, oder bei denen Keatit-Mischkristall die Haupt-Kristallphase bildet. Generell sind Lithium-Aluminosilikat-Glaskeramiken besonders für die Erfindung geeignete Materialien. Diese haben sich als besonders gut mit dem erfindungsgemäßen Verfahren einfärbbar erwiesen. Zudem können solche Glaskeramiken sowohl transparent, als auch transluzent oder sogar opak hergestellt werden, je nachdem, ob die Glaskeramik unter bevorzugter Bildung von HochquarzMischkristall oder Keatit-Mischkristall keramisiert wird.

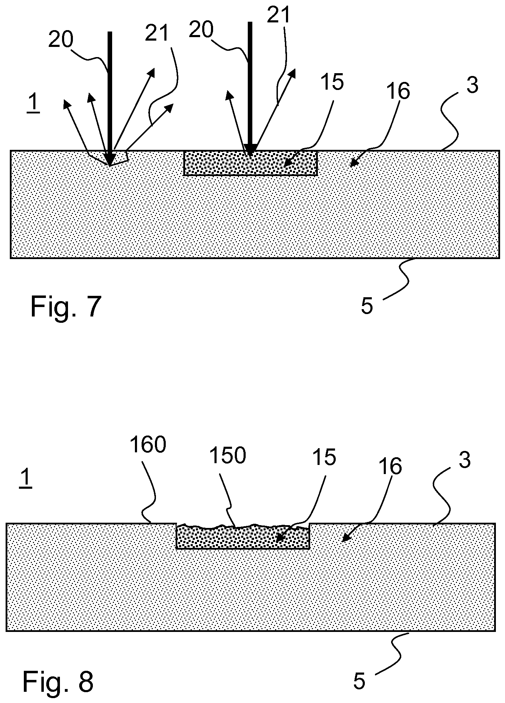

Fig. 7 zeigt ein Ausführungsbeispiel eines erfindungsgemäßen Glaskeramikelements in Form einer Glaskeramikplatte 1 aus lichtstreuender Glaskeramik mit einem zweiten Bereich 15 und benachbarten ersten Bereich 16. Im Bereich 15 wurde durch Bestrahlung mit einem intensiven gepulsten Laserstrahl der Absorptionskoeffizient der Glaskeramik lokal erhöht.

Auf eine Seite der Glaskeramikplatte einfallendes Licht 20 wird in der Glaskeramik gestreut und tritt teilweise wieder auf der gleichen Seite 3 als Streulicht 21 aus. Der Anteil des einfallenden Lichts, welcher als Streulicht 21 auf der Lichteinfallfläche, also hier der Seite 3 wieder austritt, wird als Remission bezeichnet. In Fig. 7 ist dieser Anteil durch die Anzahl remittierter Lichtstrahlen symbolisiert.

Bei dem auf den zweiten Bereich 15 einfallenden Licht 20 ist der Anteil remittierten Lichts 21 geringer. Das Licht wird durch den in diesem Bereich erhöhten Absorptionskoeffizienten zu einem größeren Anteil absorbiert, bevor es aus der Oberfläche wieder austreten kann. Der Bereich 15 erscheint damit als dunkle Färbung der Oberfläche. Die Wirkung des geänderten Absorptionskoeffizienten auf das Spektrum des remittierten Lichts ist dabei ähnlich zur Wirkung auf das transmittierte Licht, welche anhand der Fig. 2 bis Fig. 5 verdeutlicht wurde. Demgemäß gilt entsprechend auch für den Unterschied der spektralen Remissionen ρ₁(λ) (spektrale Remission des ersten Bereichs 16), ρ₂(λ) (spektrale Remission des zweiten Bereichs 15) gemäß einer Ausführungsform der Erfindung, dass der Unterschied (ρ₁(λ)-ρ₂(λ))/(ρ₁(λ)+ρ₂(λ)) in einem Spektralbereich der Wellenlänge λ von 400 bis 780 nm maximal 30%, vorzugsweise maximal 20%, bezogen auf den Mittelwert des Unterschieds in diesem Wellenlängenbereich schwankt. Auch im Fall einer lichtstreuenden Glaskeramik wird gemäß dieser Ausführungsform daher keine wesentliche Änderung des Farbtons, sondern vor allem der Helligkeit erreicht. Der behandelte Bereich 15 erscheint damit bei Betrachtung in Aufsicht dunkel. Diese Ausführungsform kann auch mit der anhand des Beispiels der Fig. 5 erläuterten Ausführungsform kombiniert werden, wenn die Glaskeramik teiltransparent ist. Dann gilt dementsprechend für die Unterschiede der Transmission und der Remission, dass diese maximal 30 % bezogen auf den Mittelwert schwanken.

Beiden Effekten liegt zu Grunde, dass der Absorptionskoeffizient bei der Bestrahlung mit dem Laser im Wesentlichen gleichmäßig abgesenkt wird. Demgemäß gilt gemäß noch einer Ausführungsform der Erfindung für die wellenlängenabhängigen Absorptionskoeffizienten α₁(λ) (Absorptionskoeffizient des ersten, unbehandelten Bereichs 16) und α₂(λ) (Absorptionskoeffizient des zweiten, behandelten Bereichs 15) wiederum eine analoge Bedingung. Gemäß dieser Ausführungsform schwankt der Unterschied (α₁(λ)-α₂(λ))/(α₁(λ)+α₂(λ)) im Wellenlängenbereich von 400 bis 780 nm wiederum um maximal 30%, vorzugsweise maximal 20% bezogen auf den Mittelwert dieses Unterschieds im genannten Wellenlängenbereich.

Gerade bei stark lichtstreuenden, wie insbesondere bei opaken Glaskeramiken ist aufgrund der Lichtstreuung die Eindringtiefe des Laserlichts gering. Bei hinreichender Plattenstärke, etwa bei 2,5 mm und mehr bleibt der Effekt der Verringerung der Transmission oder Remission, wie auch in Fig. 7 gezeigt, typischerweise auf einen Bereich 15 beschränkt, welcher sich nicht von einer Seite 3 zur gegenüberliegenden Seite erstreckt.

Weiterhin kann es bei transluzenten oder opaken Glaskeramiken auch aufgrund der starken Lichtstreuung und Konzentration der Lichtintensität auf einen oberflächennahen Bereich anders als bei den anderen hier dargestellten Ausführungsformen zu einer Ablation der Glaskeramik kommen. Weiterhin kann eine Ablation gemäß noch einer Ausführungsform auch gezielt herbeigeführt werden, indem die Pulsintensität bei der Bestrahlung der Glaskeramik zur Senkung der Transmission hinreichend hoch eingestellt, oder eine Ablation in einem separaten Prozessschritt mit geänderten Laserparametern (insbesondere Leistung und/oder Lage des Fokus) durchgeführt wird. Eine solche Ausführungsform der Erfindung kann von Vorteil sein, wenn etwa neben einer optischen auch eine haptische Erfassbarkeit des abgedunkelten Bereichs gewünscht ist.

Fig. 8 zeigt dazu eine entsprechende Variante der in Fig. 7 gezeigten Ausführungsform, bei welcher der Oberflächenbereich 150 des zweiten, erfindungsgemäß behandelten Bereichs abladiert und damit aufgerauht oder mattiert und gegebenenfalls, je nach Grad der Ablation leicht gegenüber der Oberfläche 160 vertieft ist.

Gemäß noch einem Aspekt der Erfindung ist mithin allgemein, ohne Beschränkung auf das Ausführungsbeispiel der Fig. 8 ein Verfahren zur Herstellung eines Glas- oder Glaskeramikartikels mit lokal veränderter Transmission oder Remission vorgesehen, bei welchem ein Glas- oder Glaskeramikartikel bereitgestellt und lokal begrenzt auf einen Bereich der Oberfläche des Glas- oder Glaskeramikartikels elektromagnetische Strahlung mittels eines Lasers gerichtet wird, welche im Glas, beziehungsweise der Glaskeramik absorbiert wird, wobei die Leistungsdichte des Lasers so gewählt wird, dass die Leistungsdichte des Lasers zu einer Ablation an der Oberfläche des Glas- oder Glaskeramikartikels führt und gleichzeitig im bestrahlten Bereich der Absorptionskoeffizient erhöht und damit die Transmission oder Remission abgesenkt wird.

Entsprechend wird mit diesem Verfahren ein Erzeugnis mit einem Glas- oder Glaskeramikelement, vorzugsweise einem transluzenten oder opaken Glaskeramikelement erhalten, welches einen ersten Bereich und einen benachbarten, zweiten Bereich aufweist, wobei der zweite Bereich einen geringeren Flächenanteil an der Oberfläche des Glas- oder Glaskeramikelements einnimmt, als der erste Bereich, und stärker als der erste Bereich volumengefärbt ist und wobei der zweite Bereich zumindest einen ersten farbgebenden Bestandteil aufweist, so dass die integrale Lichttransmission oder integrale Remission im sichtbaren Spektralbereich im zweiten Bereich gegenüber dem ersten Bereich reduziert ist, wobei das erste farbgebende Element die integrale Lichttransmission oder Remission im sichtbaren Spektralbereich des zweiten Bereichs reduziert und der erste und der zweite Bereich eine gemeinsame Gefügestruktur aufweisen, und wobei der Oberflächenbereich des zweiten Bereichs abladiert und/oder mattiert und/oder aufgerauht ist.

## Patentansprüche

1. Verfahren zur Herstellung eines Glas- oder Glaskeramikartikels mit lokal veränderter Transmission oder Remission, bei welchem ein Glas- oder Glaskeramikartikel bereitgestellt und lokal begrenzt auf einen Bereich der Oberfläche des Glas- oder Glaskeramikartikels elektromagnetische Strahlung mittels eines gepulsten Lasers gerichtet wird, welche im Glas bzw. der Glaskeramik absorbiert wird, wobei das Glas bzw. die Glaskeramik 1 bis 6 Gew.-% Titanoxid enthält und ein Ultrakurzlaser mit einer Pulsdauer kleiner als 1 ns verwendet wird und wobei die Leistungsdichte des Lasers so gewählt wird, dass die Leistungsdichte des Lasers unterhalb der Ablationsschwelle liegt und im bestrahlten Bereich die Transmission oder Remission abgesenkt wird, vorzugsweise der Absorptionskoeffizient erhöht wird.

2. Verfahren gemäß dem vorstehenden Anspruch, **dadurch gekennzeichnet, dass** ein Picosekundenlaser verwendet wird und/oder ein Laser mit einer Wellenlänge im Spektralbereich von 355 nm bis 1100 nm, vorzugsweise im sichtbaren Spektralbereich, bevorzugt mit einer Wellenlänge im Bereich von 500 bis 550 nm verwendet wird.

3. Verfahren gemäß einem der vorstehenden Ansprüche, **dadurch gekennzeichnet, dass** mittels eines Laserscanners in einem Scanvorgang der Laserstrahl über die Oberfläche des Glas- oder Glaskeramikartikels gerastert wird, so dass ein Bereich bestrahlt wird, dessen Oberfläche größer ist als der Lichtfleck des Laserstrahls auf der Oberfläche des Glas- oder Glaskeramikartikels.

4. Verfahren gemäß einem der vorstehenden Ansprüche, **dadurch gekennzeichnet, dass** der bereitgestellte Glas- oder ein Glaskeramikartikel zumindest eines der folgenden Elemente in ionischer und/oder metallischer Form enthält: Zinn, Eisen, Vanadium, Chrom, Cer, Neodym, Europium, Mangan, Kobalt, Nickel, Zink, Arsen, Antimon, Kupfer, Silber und/oder Gold.

5. Verfahren gemäß einem der vorstehenden Ansprüche, **dadurch gekennzeichnet, dass** der bestrahlte Bereich solange bzw. so oft bestrahlt wird, dass durch die Bestrahlung die integrale Lichttransmission des sichtbaren Spektralbereiches im bestrahlten Bereich relativ zum unbestrahlten Bereich um zumindest 5%, bevorzugt um zumindest 10% verringert wird und/oder der bestrahlte Bereich mehrfach mit dem Laserscanner überfahren wird

6. Verfahren gemäß einem der vorstehenden Ansprüche, **dadurch gekennzeichnet, dass** der Abstand der Fokusebene zur Oberfläche des Glas- oder Glaskeramikartikels während des Scanvorgangs geändert wird.

7. Verfahren gemäß einem der vorstehenden Ansprüche, wobei eine transparente Glaskeramik bereitgestellt wird.

8. Verfahren gemäß einem der Ansprüche 1 bis 6, **dadurch gekennzeichnet, dass** ein lichtstreuender Glaskeramikartikel bereitgestellt und die Glaskeramik mit dem Laser bestrahlt und der Absorptionskoeffizient der Glaskeramik durch die Bestrahlung abgesenkt wird, so dass die Remission für sichtbares Licht im bestrahlten Bereich um zumindest 5% abgesenkt wird.

9. Verfahren gemäß einem der vorstehenden Ansprüche, wobei ein volumengefärbter Glas- oder Glaskeramikartikel bereitgestellt wird.

10. Erzeugnis mit einem Glas- oder Glaskeramikelement, welches einen ersten Bereich und einen benachbarten, zweiten Bereich aufweist,
wobei der zweite Bereich einen geringeren Flächenanteil an der Oberfläche des Glas- oder Glaskeramikelements einnimmt, als der erste Bereich, und stärker als der erste Bereich volumengefärbt ist und wobei
der zweite Bereich zumindest einen ersten farbgebenden Bestandteil aufweist, so dass
die integrale Lichttransmission oder integrale Remission im sichtbaren Spektralbereich im zweiten Bereich gegenüber dem ersten Bereich reduziert ist, wobei das erste farbgebende Element die integrale Lichttransmission oder Remission im sichtbaren Spektralbereich des zweiten Bereichs reduziert und der erste und der zweite Bereich eine gemeinsame Gefügestruktur aufweisen
und wobei das Glas oder die Glaskeramik Titanoxid mit einem Anteil im Bereich von 1 bis 6 Gewichtsprozent an der Zusammensetzung enthält.

11. Erzeugnis gemäß Anspruch 10, **gekennzeichnet dadurch, dass** die Lichtstreuung im Glas oder in der Glaskeramik des zweiten Bereichs höchstens um absolut 20 %, vorzugsweise höchstens um absolut 10 % gegenüber der Lichtstreuung im Glas oder in der Glaskeramik des ersten Bereichs höher ist.

12. Erzeugnis gemäß Anspruch 10 oder 11, **gekennzeichnet dadurch, dass** das Glas oder die Glaskeramik des Glas- oder Glaskeramikelementes zumindest einer der folgenden Elemente enthält: Zinn, Eisen, Vanadium, Chrom, Cer, Neodym, Europium, Mangan, Kobalt, Nickel, Zink, Arsen, Antimon, Kupfer, Silber und/oder Gold.

13. Erzeugnis gemäß einem der Ansprüche 10 bis 12, **gekennzeichnet dadurch, dass** die integrale Lichttransmission im sichtbaren Spektralbereich des zweiten Bereichs um zumindest 5%, vorzugsweise zumindest 10 %, besonders bevorzugt zumindest 20 % geringer ist als die Lichttransmission im ersten Bereich.

14. Erzeugnis gemäß einem der Ansprüche 10 bis 13, **dadurch gekennzeichnet, dass** sich der zweite Bereich von einer ersten bis zu einer zweiten, gegenüberliegenden Oberfläche des Glas- oder Glaskeramikelements erstreckt.

15. Erzeugnis gemäß einem der Ansprüche 12 bis 16, **dadurch gekennzeichnet, dass** das Glas- oder Glaskeramikelement ein Glaskeramikelement, bevorzugt ein Aluminiumsilikat-Glaskeramikelement ist.

16. Erzeugnis gemäß Anspruch 15, **dadurch gekennzeichnet, dass** der oder die ersten Bereiche des Glaskeramikelementes transparent sind.

17. Erzeugnis gemäß einem der Ansprüche 10 bis 15, **dadurch gekennzeichnet, dass** das Glas- oder Glaskeramikelement volumengefärbte erste Bereiche aufweist.

18. Erzeugnis gemäß einem der Ansprüche 10 bis 15, **gekennzeichnet durch** ein lichtstreuendes Glaskeramikelement, bei welchem der zweite Bereich eine gegenüber dem ersten Bereich um mindestens 5% geringere Remission aufweist.

19. Erzeugnis gemäß einem der vorstehenden Ansprüche 10 bis 18, **dadurch gekennzeichnet, dass** zumindest eine der Bedingungen erfüllt ist:
- der Unterschied (τ₁(λ)-τ₂(λ))/(τ₁(λ)+τ₂(λ)) der Transmission mit τ₁(λ) als Transmission eines ersten Bereiches (16) für eine bestimmte Wellenlänge λ und mit τ₂(λ) als Transmission eines zweiten Bereiches (15) für diese Wellenlänge schwankt bei einer Variation der Wellenlänge über den Spektralbereich von 400 nm bis 780 nm um maximal 30%, vorzugsweise maximal 20%, bezogen auf den Mittelwert des Unterschieds der Transmission,
- der Unterschied (ρ₁(λ)-ρ₂(λ))/(ρ₁(λ)+ρ₂(λ)) der Remission mit ρ₁(λ) als Remission des ersten Bereiches (16) für eine bestimmte Wellenlänge λ und mit ρ₂(λ) als Remission eines zweiten, benachbarten Bereiches (15) für diese Wellenlänge schwankt bei einer Variation der Wellenlänge über den Spektralbereich von 400 nm bis 780 nm um maximal 30%, vorzugsweise maximal 20%, bezogen auf den Mittelwert des Unterschieds der Remission,
- der Unterschied (α₁(λ)-α₂(λ))/(α₁(λ)+α₂(λ)) des Absorptionskoeffizienten mit α₁(λ) als Absorptionskoeffizienten des ersten Bereiches (16) für eine bestimmte Wellenlänge λ und mit α₂(λ) als Absorptionskoeffizienten des zweiten Bereiches (15) für diese Wellenlänge schwankt bei einer Variation der Wellenlänge über den Spektralbereich von 400 nm bis 780 nm um maximal 30%, vorzugsweise maximal 20%, bezogen auf den Mittelwert des Unterschieds des Absorptionskoeffizienten,
- das Glas- oder Glaskeramikelement einen Anteil des zweiten Bereichs von höchstens 49 %, bevorzugt höchstens 30 % und besonders bevorzugt höchstens 10 % bezogen auf das Volumen des Glas- oder Glaskeramikelementes aufweist

20. Erzeugnis gemäß einem der vorstehenden Ansprüche 10 bis 19, **dadurch gekennzeichnet, dass** der Oberflächenbereich des zweiten Bereichs abladiert, mattiert oder aufgerauht ist.

21. Verfahren zur Herstellung eines Glas- oder Glaskeramikartikels mit lokal veränderter Transmission oder Remission, bei welchem
ein Glas- oder Glaskeramikartikel bereitgestellt und lokal begrenzt auf einen Bereich der Oberfläche des Glas- oder Glaskeramikartikels elektromagnetische Strahlung mittels eines gepulsten Lasers gerichtet wird, welche im Glas, beziehungsweise der Glaskeramik absorbiert wird,
wobei das Glas bzw. die Glaskeramik 1 bis 6 Gew.-% Titanoxid enthält und mit Laserpulsen einer Pulsdauer kleiner als 1 ns bestrahlt wird,
wobei die Leistungsdichte des Lasers so gewählt wird, dass die Leistungsdichte des Lasers zu einer Ablation an der Oberfläche des Glas- oder Glaskeramikartikels führt und im bestrahlten Bereich der Absorptionskoeffizient erhöht und damit die Transmission oder Remission abgesenkt wird.

## Claims

1. A method for producing a glass or glass ceramic article with locally modified transmittance or remittance, wherein:
a glass or glass ceramic article is provided; and
electromagnetic radiation is directed onto a region of the surface of said glass or glass ceramic article in locally limited manner by means of a pulsed laser, said radiation being absorbed in the glass or glass ceramic,
wherein the glass or glass ceramic contains from 1 to 6 wt.% of titanium oxide and an ultra-short pulse laser with a pulse duration of less than 1 ns is used; and
wherein a power density of the laser is selected so that the power density of the laser is below the ablation threshold and the transmittance or remittance is reduced in the irradiated region, preferably the absorption coefficient is increased.

2. The method according to the preceding claim, **characterised in that** a picosecond laser is used and/or a laser with a wavelength in the spectral range from 355 nm to 1100 nm is used, preferably in the visible spectral range, preferably with a wavelength in the range from 500 to 550 nm.

3. The method according to any one of the preceding claims, **characterised in that** during a scanning process a laser scanner scans the laser beam over the surface of the glass or glass ceramic article so that a region is irradiated which has a larger surface area than the light spot of the laser beam on the surface of the glass or glass ceramic article.

4. The method according to any one of the preceding claims, **characterised in that** the provided glass or glass ceramic article contains at least one of the following elements in ionic and/or metallic form: tin, iron, vanadium, chromium, cerium, neodymium, europium, manganese, cobalt, nickel, zinc, arsenic, antimony, copper, silver, and/or gold.

5. The method according to any one of the preceding claims, **characterised in that** the irradiated region is irradiated for a sufficiently long duration or with a sufficient number of repetitions so that in the irradiated region, due to the irradiation, integral light transmittance within the visible spectral range is reduced by at least 5 %, preferably by at least 10 % compared to the non-irradiated region and/or wherein the irradiated region is passed repeatedly by the laser scanner.

6. The method according to any one of the preceding claims, **characterised in that** the distance of the focal plane to the surface of the glass or glass ceramic article is altered during the scanning process.

7. The method according to any one of the preceding claims, wherein a transparent glass ceramic is provided.

8. The method according to any one of claims 1 to 6, **characterised in that** a light-diffusing glass ceramic article is provided and the glass ceramic is irradiated by means of the laser and the absorption coefficient of the glass ceramic is reduced by said irradiation so that the remittance of the irradiated region for visible light is reduced by at least 5 %.

9. The method according to any one of the preceding claims, wherein a volume-coloured glass or glass ceramic article is provided.

10. A product comprising a glass or glass ceramic element having a first region and an adjacent second region; wherein the second region occupies a smaller surface area of the surface of the glass or glass ceramic element than the first region and is more intensely volume-coloured than the first region; and wherein the second region includes at least one first colouring component; so that in the visible spectral range integral light transmittance or integral remittance is reduced in the second region compared to the first region; wherein the first colouring component reduces the integral light transmittance or remittance of the second region in the visible spectral range; and wherein the first and second regions have a common microstructure; and wherein the glass or the glass ceramic contains titanium oxide in a content ranging from 1 to 6 percent by weight of the composition.

11. The product according to claim 10, **characterised in that** light scattering in the glass or in the glass ceramic of the second region is higher by not more than 20 percentage points, preferably by not more than 10 percentage points than light scattering in the glass or glass ceramic of the first region.

12. The product according to claim 10 or 11, **characterised in that** the glass or the glass ceramic of the glass or glass ceramic element contains at least one of the following elements: tin, iron, vanadium, chromium, cerium, neodymium, europium, manganese, cobalt, nickel, zinc, arsenic, antimony, copper, silver, and/or gold.

13. The product according to any one of claims 10 to 12, **characterised in that** in the visible spectral range integral light transmittance of the second region is lower by at least 5 %, preferably at least 10 %, more preferably at least 20 % than light transmittance in the first region.

14. The product according to any one of claims 10 to 13, **characterised in that** the second region extends from a first surface to a second, opposite surface of the glass or glass ceramic element.

15. The product according to any one of claims 12 to 16, **characterised in that** the glass or glass ceramic element is a glass ceramic element, preferably an aluminosilicate glass ceramic element.

16. The product according to claim 15, **characterised in that** the one or more first region(s) of the glass ceramic element are transparent.

17. The product according to any one of claims 10 to 15, **characterised in that** the glass or glass ceramic element has volume-coloured first regions.

18. The product according to any one of claims 10 to 15, **characterised by** a light diffusing glass ceramic element in which the second region has a remittance that is lower by at least 5 % compared to the first region.

19. The product according to any one of the preceding claims 10 to 18, **characterised in that** at least one of the following conditions is met:
- the difference (τ₁(λ)-τ₂(λ))/(τ₁(λ)+τ₂(λ)) of the transmittance, wherein τ₁(λ) is the transmittance of a first region (16) for a specific wavelength λ and τ₂(λ) is the transmittance of a second region (15) for this wavelength, varies by not more than 30 %, preferably not more than 20 % with respect to the average value of this difference of transmittance for a variation of the wavelength over the spectral range from 400 nm to 780 nm;
- the difference (ρ₁(λ)-ρ₂(λ))/(ρ₁(λ)+ρ₂(λ)) of the remittance, wherein ρ₁(λ) is the remittance of a first region (16) for a specific wavelength λ and ρ₂(λ) is the remittance of a second, adjacent region (15) for this wavelength, varies by not more than 30 %, preferably not more than 20 % with respect to the average value of this difference of remittance for a variation of the wavelength over the spectral range from 400 nm to 780 nm;
- the difference (α₁(λ)-α₂(λ))/(α₁(λ)+α₂(λ)) of the absorption coefficient, wherein α₁(λ) is the absorption coefficient of the first region (16) for a specific wavelength λ and α₂(λ) is the absorption coefficient of the second region (15) for this wavelength, varies by not more than 30 %, preferably not more than 20 % with respect to the average value of this difference of the absorption coefficient for a variation of the wavelength over the spectral range from 400 nm to 780 nm;
- the glass or glass ceramic element comprises a proportion of the second region of at most 49 %, preferably at most 30 %, and most preferably at most 10 % based on the volume of the glass or glass ceramic element.

20. The product according to any one of the preceding claims 10 to 19, **characterised in that** the surface region of the second region is ablated, matte, or roughened.

21. A method for producing a glass or glass ceramic article with locally modified transmittance or remittance, wherein:
a glass or glass ceramic article is provided; and
electromagnetic radiation is directed onto a region of the surface of the glass or glass ceramic article in locally limited manner by means of a pulsed laser, said radiation being absorbed in the glass or the glass ceramic;
wherein the glass or the glass ceramic contains from 1 to 6 wt.% of titanium oxide and is irradiated with laser pulses of a pulse duration of less than 1 ns;
wherein a power density of the laser is selected so that said power density of the laser causes ablation at the surface of the glass or glass ceramic article and the absorption coefficient is increased in the irradiated region and thereby transmittance or remittance is reduced.

## Revendications

1. Procédé de fabrication d'un article en vitrocéramique ou en verre à facteur de transmission ou à facteur de réflexion localement modifié, selon lequel un article en verre ou en vitrocéramique est fourni et un rayonnement électromagnétique, qui est absorbé dans le verre ou la vitrocéramique, est orienté à l'aide d'un laser pulsé de façon localement limitée sur une zone de la surface de l'article en verre ou en vitrocéramique, dans lequel le verre ou la vitrocéramique contient 1 à 6 % en poids d'oxyde de titane et un laser ultracourt présentant une durée d'impulsion inférieure à 1 ns est utilisé et dans lequel la densité de puissance du laser est choisie de telle sorte que la densité de puissance du laser soit inférieure au seuil d'ablation et que le facteur de transmission ou de réflexion soit abaissé dans la zone irradiée, que le coefficient d'absorption soit de préférence augmenté.

2. Procédé selon la revendication précédente, **caractérisé en ce qu'**un laser picoseconde est utilisé et/ou un laser présentant une longueur d'onde dans le domaine spectral de 355 nm à 1100 nm, de préférence dans le domaine spectral visible, de préférence présentant une longueur d'onde dans la plage de 500 à 550 nm, est utilisé.

3. Procédé selon l'une quelconque des revendications précédentes, **caractérisé en ce que** le faisceau laser effectue un balayage de la surface de l'article en vitrocéramique ou en verre au moyen d'un balayeur laser au cours d'une procédure de balayage, de sorte qu'une zone dont la surface est plus grande que celle de la tache lumineuse du faisceau laser sur la surface de l'article en vitrocéramique ou en verre est irradiée.

4. Procédé selon l'une quelconque des revendications précédentes, **caractérisé en ce que** l'article en vitrocéramique ou en verre fourni contient au moins un des éléments suivants sous forme ionique et/ou métallique :
étain, fer, vanadium, chrome, cérium, néodyme, europium, manganèse, cobalt, nickel, zinc, arsenic, antimoine, cuivre, argent et/ou or.

5. Procédé selon l'une quelconque des revendications précédentes, **caractérisé en ce que** la zone irradiée est irradiée aussi longtemps ou aussi souvent que le facteur de transmission de lumière intégral du domaine spectral visible dans la zone irradiée par rapport à la zone non irradiée est réduit d'au moins 5 %, de préférence d'au moins 10 % et/ou que la zone irradiée est parcourue plusieurs fois par le balayeur laser.

6. Procédé selon l'une quelconque des revendications précédentes, **caractérisé en ce que** l'écart entre le plan focal et la surface de l'article en vitrocéramique ou en verre est modifié pendant la procédure de balayage.

7. Procédé selon l'une quelconque des revendications précédentes, dans lequel une vitrocéramique transparente est fournie.

8. Procédé selon l'une quelconque des revendications 1 à 6, **caractérisé en ce qu'**un article en vitrocéramique dispersant la lumière est fourni et la vitrocéramique est irradiée par le laser et le coefficient d'absorption de la vitrocéramique est réduit par l'irradiation, de sorte que le facteur de réflexion pour la lumière visible dans la zone irradiée est réduit d'au moins 5 %.

9. Procédé selon l'une quelconque des revendications précédentes, dans lequel un article en vitrocéramique ou en verre teinté en volume est fourni.

10. Produit comportant un élément en vitrocéramique ou en verre, qui comporte une première zone et une deuxième zone adjacente,
dans lequel la deuxième zone occupe une fraction de la surface de l'élément en verre ou en vitrocéramique qui est plus petite que la première zone, et est plus fortement teintée en volume que la première zone et dans lequel
la deuxième zone comprend au moins un premier colorant de sorte que le facteur de transmission de lumière intégral ou le facteur de réflexion intégral dans le domaine spectral visible est réduit dans la deuxième zone par rapport à la première zone, le premier colorant réduisant le facteur de transmission de lumière ou le facteur de réflexion intégral dans le domaine spectral visible de la deuxième zone et les première et deuxième zones présentant une structure commune,
et dans lequel le verre ou la vitrocéramique contient de l'oxyde de titane présentant une fraction dans la plage de 1 à 6 pour cent en poids de la composition.

11. Produit selon la revendication 10, **caractérisé en ce que** la dispersion de la lumière dans le verre ou dans la vitrocéramique de la deuxième zone est plus élevée au maximum d'absolument 20 %, de préférence au maximum d'absolument 10 % par rapport à la dispersion de la lumière dans le verre ou la vitrocéramique de la première zone.

12. Produit selon la revendication 10 ou 11, **caractérisé en ce que** le verre ou la vitrocéramique de l'élément en verre ou en vitrocéramique contient au moins un des éléments suivants : étain, fer, vanadium, chrome, cérium, néodyme, europium, manganèse, cobalt, nickel, zinc, arsenic, antimoine, cuivre, argent et/ou or.

13. Produit selon l'une quelconque des revendications 10 à 12, **caractérisé en ce que** le facteur de transmission de lumière intégral dans le domaine spectral visible de la deuxième zone est plus petit d'au moins 5 %, de préférence d'au moins 10 %, de manière particulièrement préférée d'au moins 20 % que le facteur de transmission de lumière dans la première zone.

14. Produit selon l'une quelconque des revendications 10 à 13, **caractérisé en ce que** la deuxième zone s'étend d'une première à une deuxième surface opposée de l'élément en vitrocéramique ou en verre.

15. Produit selon l'une quelconque des revendications 12 à 16, **caractérisé en ce que** l'élément en vitrocéramique ou en verre est un élément en vitrocéramique, de préférence un élément en vitrocéramique en silicate d'aluminium.

16. Produit selon la revendication 15, **caractérisé en ce que** la ou les premières zones de l'élément en vitrocéramique sont transparentes.

17. Produit selon l'une quelconque des revendications 10 à 15, **caractérisé en ce que** l'élément en vitrocéramique ou en verre comporte des premières zones teintées en volume.

18. Produit selon l'une quelconque des revendications 10 à 15, **caractérisé par** un élément en vitrocéramique dispersant la lumière, avec lequel la deuxième zone présente un facteur de réflexion plus petit d'au moins 5 % par rapport à celui de la première zone.

19. Produit selon l'une quelconque des revendications 10 à 18, **caractérisé en ce qu'**au moins une des conditions est remplie :
- la différence (τ₁(λ) -τ₂(λ))/(τ₁(λ)+τ₂(λ)) du facteur de transmission, τ₁(λ) étant le facteur de transmission d'une première zone (16) pour une longueur d'onde λ prédéfinie et τ₂(λ) étant le facteur de transmission d'une deuxième zone (15) pour cette longueur d'onde, fluctue, dans le cas d'une variation de la longueur d'onde sur toute l'étendue du domaine spectral allant de 400 nm à 780 nm, de maximum 30 %, de préférence de maximum 20 %, rapporté à la valeur moyenne de la différence du facteur de transmission,
- la différence (ρ₁(λ)-ρ₂(λ))/(ρ₁(λ)+p₂(λ)) du facteur de réflexion, ρ₁(λ) étant le facteur de réflexion de la première zone (16) pour une longueur d'onde λ prédéfinie et ρ₂(λ) étant le facteur de réflexion d'une deuxième zone (15) pour cette longueur d'onde, fluctue, dans le cas d'une variation de la longueur d'onde sur toute l'étendue du domaine spectral allant de 400 nm à 780 nm, de maximum 30 %, de préférence de maximum 20 %, rapporté à la valeur moyenne de la différence du facteur de réflexion,
- la différence (α1(λ)-α₂(λ))/(α₁(λ)+α₂(λ) du coefficient d'absorption, α₁(λ) étant le coefficient d'absorption de la première zone (16) pour une longueur d'onde λ prédéfinie et α₂ (λ) étant le coefficient d'absorption de la deuxième plage (15) pour cette longueur d'onde, fluctue, dans le cas d'une variation de la longueur d'onde sur toute l'étendue du domaine spectral allant de 400 nm à 780 nm, de maximum 30 %, de préférence de maximum 20 %, rapporté à la valeur moyenne de la différence du coefficient d'absorption,
- l'élément en vitrocéramique ou en verre comprend une fraction de la deuxième zone de maximum 49 %, de préférence de maximum 30 % et de manière particulièrement préférée de maximum 10 % rapporté au volume de l'élément en vitrocéramique ou en verre.

20. Produit selon l'une quelconque des revendications 10 à 19, **caractérisé en ce que** la région superficielle de la deuxième zone est soumise à une ablation, dépolie ou rendue rugueuse.

21. Procédé de fabrication d'un article en vitrocéramique ou en verre présentant un facteur de transmission ou de réflexion localement modifié, selon lequel un article en vitrocéramique ou en verre est fourni et un rayonnement électromagnétique, qui est absorbé dans le verre ou la vitrocéramique, est orienté à l'aide d'un laser pulsé de façon localement limitée sur une zone de la surface de l'article en verre ou en vitrocéramique,
dans lequel le verre ou la vitrocéramique contient 1 à 6 % en poids d'oxyde de titane et est irradié à l'aide d'impulsions de laser d'une durée d'impulsion inférieure à 1 ns,
dans lequel la densité de puissance du laser est choisie de telle sorte que la densité de puissance du laser entraîne une ablation à la surface de l'article en vitrocéramique ou en verre et que le coefficient d'absorption soit augmenté dans la zone irradiée, et que le facteur de transmission ou de réflexion soit donc réduit.
